# EUROPEAN PATENT SPECIFICATION

(11) **EP 3 676 028 B1**
(45) Date of publication and mention of the grant of the patent: **03.03.2021**
(21) Application number: 18785720.6
(22) Date of filing: 05.10.2018
(51) Int. Cl.: B08B 9/055, F16L 55/42, F16L 101/12

(54) **METHOD OF PURGING A LIQUID-CARRYING CONDUIT WITH A HYDROGEL**
VERFAHREN ZUM SPÜLEN EINER FLÜSSIGKEITSFÜHRENDEN LEITUNG MIT EINEM HYDROGEL
PROCÉDÉ DE PURGE D'UN CONDUIT DE LIQUIDE AVEC UN HYDROGEL

(30) Priority: 13.10.2017 GB 201716773
(43) Date of publication of application: 08.07.2020
(73) Proprietor: Alchemy Oilfield Services Ltd, Aberdeen A10 1HA (GB)
(72) Inventor: MURRAY, James, Aberdeen Aberdeenshire AB15 4UA (GB); TAYLOR, Alison, Inverurie Aberdeenshire AB51 4TJ (GB)
(74) Representative: Cameron Intellectual Property Ltd
(86) International application number: PCT/GB2018/052844
(87) International publication number: WO 2019/073207

(56) References cited:
- GB-A- 2 358 229
- GB-A- 2 383 831
- US-A- 4 543 131
- US-A1- 2005 178 546

## Description

The present invention relates to a method of purging and subsequently verifying a liquid carrying conduit and particularly, though not exclusively, a potable water carrying conduit. A method of manufacturing of a hydrogel for the same purpose and a hydrogel adapted for purging a liquid carrying conduit is also disclosed (but does not form part of the claimed invention).

The internal condition of pipelines carrying clean water from a water source to commercial and domestic premises often deteriorate over time. Debris, for example, metal oxides such as rust, can form within the pipeline and become entrained in the flow of water leading to a deterioration in water quality and/or purity. In such circumstances, portions of the pipeline may be removed and replaced to address the problem and reinstate adequate water quality. Removal and replacement of pipeline portions is expensive and time consuming particularly where the pipeline is located in an inaccessible location, such as underneath a road or other civil engineering structure.

Chemicals can be used to clean pipelines. However, any chemical delivery system must ensure that the chemical contacts the entire cross-section of the pipeline to achieve a thorough clean. In addition, there are strict regulations regarding the use and residual content of chemicals in pipelines that carry drinking water.

It is an object of the present invention to provide a safe and effective method of cleaning, for example, a drinking water pipeline, while ensuring a means of achieving compliance with regulations governing safety of drinking water pipelines.

Dyed gel slugs have been used as part of a cleaning process for pipelines in food production machinery as is disclosed in, for example, GB2383831A (Aubin Ltd).

According to the invention there is provided, a method of purging a liquid-carrying conduit, the method including the steps of:
providing a hydrogel comprising an additive in the form of an ion selected from the group comprising: chloride ions, sulphate ions, and nitrate ions;
transporting the hydrogel along at least a portion of an offline liquid-carrying conduit to thereby purge the conduit of debris;
removing the hydrogel from the offline liquid-carrying conduit;
flushing the offline liquid-carrying conduit with a volume of flushing water;
verifying removal of any residual hydrogel from the offline liquid-carrying conduit as part of a contamination risk assessment by checking the flushed water for detectable traces of the additive ion;
wherein the additive ion is dissociable from the hydrogel by diffusing into the volume of flushing water to thereby enable detection of its presence within a volume of flushing water collected from the offline liquid-carrying conduit following the flushing step; and
wherein, if the presence of the additive is detected following the flushing step, the method further includes repeating the step of flushing the offline liquid-carrying conduit with a further volume of flushing water; and repeating the verifying step until no traces of the additive ion are detected within the further volume of flushing water.

Optionally, the liquid-carrying conduit is a potable water carrying conduit.

The step of purging the conduit may include transporting the hydrogel along at least a portion of the water carrying conduit and entraining debris as the hydrogel moves along the conduit.

The method can include transporting the hydrogel along at least a portion of the water carrying conduit by applying a pressure differential across the hydrogel to urge forward movement of the hydrogel along the conduit.

The method can include transporting a crosslinked hydrogel containing an additive along at least a portion of a water carrying conduit.

The method can include transporting an uncrosslinked hydrogel containing an additive along at least a portion of the water carrying conduit. The method can include transporting an uncrosslinked hydrogel containing an additive along at least a portion of the water carrying conduit by locating the uncrosslinked gel between two solid members. The solid member can include at least one member selected from the group consisting of: a crosslinked hydrogel, a solid gel and a mechanical pig.

The method can include transporting a train comprising at least one crosslinked hydrogel plug and a treatment fluid, each containing an additive, along at least a portion of the water carrying conduit.

The method can include transporting a train comprising two crosslinked hydrogel plugs with a treatment fluid therebetween, wherein the hydrogel plugs and the treatment fluid each contain an additive, along at least a portion of the water carrying conduit.

The treatment fluid can include at least one substance having a detectable additive and selected from the group consisting of: sterilisation fluid, root invasion treatment, debris removal fluid, rust treatment, colour removal treatment, biocidal chemicals; abrasive agents; ground glass and ceramic particles.

The method of the invention can include purging and subsequently verifying an 'offline' water carrying conduit contains no residual hydrogel for risk assessment to review verifying 'online' status.

The 'water carrying conduit' may be any pipeline that is capable of carrying water. Such a pipeline may be provided for the transportation of water in normal use or may be anticipated to be used for the purpose of carrying water at some future point in time. The 'water carrying conduit' may be 'offline' such that it is not carrying water for drinking water purposes at the time of the method of the invention.

The water carrying conduit may be used historically, presently or at some stage in the future for carrying potable or drinking water suitable for human consumption. Removing the hydrogel from the water carrying conduit can be achieved by transporting the hydrogel to an outlet and extracting the hydrogel through the outlet. Debris entrained within the hydrogel may be simultaneously removed to purge the conduit.

The method may include verifying removal of the hydrogel from the water carrying conduit by visually observing the flushed water for detectable traces of the additive. In this case, the additive can be selected to provide a visual indicator when present in water. For example, the additive may be selected to colour water in which it is present.

The method may include locating an inspection window downstream of the water carrying conduit and directing flushed water proximate the inspection window for visually, or electronically, checking for detectable traces of the additive.

Should detectable traces of the additive be discovered, the method can include repeating the flushing and verifying method steps as many times as required.

Should significant quantities of debris be observed following the purging step and during the removal of hydrogel, the purging and/or flushing method steps can be repeated as often as required to adequately clean the water carrying conduit.

The method may include verifying removal of the hydrogel from the water using, inter alia, one of the following detection methods: visual observation; colorimeter analysis; spectrophotometer analysis; fluorimeter analysis; atomic absorption spectrophotometry; inductively coupled plasma emission spectroscopy (ICP); Palin DPD method/test; and silver nitrate method using sodium dichromate indicator.

The method can include a prior step of adding the hydrogel to the water carrying conduit. The method can include the step of combining a hydrogel base gel and a gelling agent in the region of the water carrying conduit or within a short distance from the water carrying conduit.

The method can include the step of combining a hydrogel base gel having a polymer content of greater than about 0.3% with a gelling agent in the region of the water carrying conduit or within a short distance from the water carrying conduit. The method can include the step of combining a hydrogel base gel having a polymer content of approximately 1.6% with a gelling agent in the region of the water carrying conduit or within a short distance from the water carrying conduit and thus adding a high crosslinked hydrogel to the water carrying conduit.

According to a second embodiment (not forming part of the present invention), there is provided a method of manufacture of a hydrogel for purging and subsequently verifying a potable water carrying conduit, the method including the steps of:
preparing a premix slurry containing a polymer;
blending the premix slurry with a potable water based solution; and
adding a detectable additive to at least one of the premix slurry and the potable water based solution; wherein the additive is in the form of chloride ions and/or sulphate ions and/or nitrate ions and/or fluorescein dye and/or carmine dye and/or cation salts and is at least partially dissociable from the hydrogel in the presence of water.

The step of preparing the premix slurry can include mixing a polymer with a carrier fluid.

Preferably, at least one of the polymer and the carrier fluid is high quality and high purity.

Preferably, at least one of the polymer and the carrier fluid is a food grade product.

Preferably, at least one of the polymer and the carrier fluid has a low bacterial content.

The polymer may be at least one product selected from the group consisting of: guar gum, hydroxyl propyl guar gum, xantham gum, carboxy methyl cellulose or other substituted cellulose based polymers, and fine cellulose fibres such as Arbocel®.

If the polymer selected is hydroxyl propyl guar gum, the method includes spreading the polymer on the carrier fluid. The method may further include neutralising the pH of the premix slurry. The pH may be neutralised by adding a predetermined quantity of organic acid to the premix slurry.

The carrier fluid may comprise monoethylene glycol, glycol, glycerol or other low water content glycol such as triethylene glycol.

The carrier fluid may comprise between 0 and 50% of glycol ether. The carrier fluid may comprise between 0 and 50% of glycol ether when the premix slurry is prepared in ambient temperatures around or greater than 30°C.

The volume of carrier fluid in litres may be greater than the weight of the polymer in kilograms. The volume of carrier fluid in litres may be at least double the weight of the polymer in kilograms. The volume of carrier fluid in litres may be around three times greater than the weight of the polymer in kilograms.

The method may include the step of mixing the carrier fluid and the polymer to achieve a substantially even constituency.

The method may include the step of mixing the carrier fluid and the polymer using a high shear mixer to achieve a substantially even constituency.

The method may include the step of mixing the carrier fluid and the polymer using a paddle stirrer to achieve a substantially even constituency.

Creation of a premix slurry in the method of manufacture of the hydrogel is advantageous since it reduces the likelihood of 'balls' or 'lumps' of polymer forming, which reduce the amount of available polymer within the gel for viscosity and/or cross-linking.

The potable water based solution may be formed by dissolving sodium chloride with potable water. A quantity of between 1 and 20% sodium chloride may be added to the potable water. Between around 2 and 10% of sodium chloride may be added to the potable water. Around approximately 4% of sodium chloride may be added to the potable water.

The potable water based solution may further include sodium metabisulphate. Around between 100-600gms of sodium metabisulphate per 1000 litres of solution may be added. Around between 200 - 500gms of sodium metabisulphate per 1000 litres of solution may be added. Around approximately 350gms of sodium metabisulphate per 1000 litres of solution may be added.

Alternatively, or additionally, sodium hypochlorite may be added to the potable water based solution.

The potable water based solution may be mixed using high shear mixing. The potable water based solution may be mixed using a mixer for a limited period of time.

The potable water based solution may be blended to ensure thorough mixing for a predetermined length of time. The potable water based solution may be blended to ensure thorough mixing for a predetermined length of time that is increased at lower ambient temperatures. The potable water based solution may be blended to ensure thorough mixing for a predetermined length of time that is decreased at higher ambient temperatures.

The method can include crosslinking at least a portion of the polymer contained within the hydrogel.

The method can include combining a gelling agent for crosslinking the polymer within the hydrogel.

The gelling agent may include potable water and at least one of the products selected from the group consisting of: ulexite mineral, boric acid, and sodium hydroxide.

The method of manufacture may include providing a blend vessel in which the hydrogel is blended.

The blend vessel may have a capacity between 100 and 10000 litres. The blend vessel may have a capacity between around 500 and 5000 litres. The blend vessel may have a capacity of 500, 2500 or 5000 litres.

Preferably, the blend vessel is provided with a mixing mechanism. The mixing mechanism may include at least one of the following: high shear mixer, stirring paddles, blending means, and recirculation pump.

The method of manufacture can include preparing the blend vessel prior to use. The method may include cleaning the blend vessel prior to use. The method may include sterilising the blend vessel prior to use.

The method may include spraying the blend vessel with a cleaning fluid to clean and/or sterilise the vessel. The method may include soaking the blend vessel in a cleaning fluid to clean and/or sterilise the vessel. The method may include circulating a cleaning fluid through the blend vessel to clean and/or sterilise the vessel.

The cleaning fluid may be circulated and/or the vessel may be soaked in the cleaning/sterilising fluid for a period of time between 5 minutes and 2 hours. The cleaning fluid may be circulated and/or the vessel may be soaked in the cleaning fluid for a period of time between 10 minutes and 1 hour. The cleaning fluid may be circulated and/or the vessel may be soaked in the cleaning fluid for a period of time around approximately 20 minutes.

Preferably, the cleaning/sterilising fluid is sodium metabisulphate; or a solution of calcium hypochlorite in water; or a solution of sodium hypochlorite with around 14% available free chlorine.

Following cleaning and/or sterilising of the vessel, the vessel can be flushed and/or rinsed. The vessel can be flushed with potable water.

According to a third embodiment (not forming part of the present invention), there is provided a hydrogel adapted for use in purging a potable water carrying conduit, wherein the composition of the hydrogel is selected to purge the conduit, and wherein the hydrogel further comprises an additive in the form of chloride ions and/or sulphate ions and/or nitrate ions and/or cation salts which are at least partially dissociable from the hydrogel in the presence of water to thereby enable detection of the presence or absence of trace amounts of said additive within a volume of water.

The composition of the hydrogel can be selected to entrain debris within the water carrying conduit.

The composition of the hydrogel can be selected to clean the water carrying conduit.

The hydrogel can include a polymer.

The polymer can have an uncrosslinked structure.

The polymer can have a crosslinked structure.

The percentage polymer content of the hydrogel can be selected according to the desired degree of cross-linking required.

The polymer may be at least one product selected from the group consisting of: guar gum, hydroxyl propyl guar gum, xantham gum, carboxy methyl cellulose or other substituted cellulose based polymers, fine cellulose fibres such as Arbocel®.

The additive can be at least one substance selected from the group consisting of: food grade dyestuffs, carmine dye derived from cochineal, fluorescein dye, sodium metabisulphite, cation salts (salts of alkali or alkali earth metals), and chlorine/chloride ions.

Further features and advantages of the present invention will become apparent from the claims and the following description.

Embodiments of the invention will now be described by way of example only.

### METHOD OF MANUFACTURE OF A HYDROGEL

According to one embodiment (not forming part of the present invention), a method of manufacture of a hydrogel base gel is described. The hydrogel base gel forms an uncrosslinked structure and can be utilised in certain applications for purging a pipeline as discussed hereinafter. The optional addition of a gelling agent to the hydrogel base gel causes the polymeric structure to crosslink and results in a hydrogel having different physical properties, the uses of which are also discussed hereinafter. Certain steps prior to creation of the hydrogels will now be described. These include preparation of: equipment; a pre-mix slurry; and a gelling agent.

### Equipment

A blend vessel of 500litres, 2500 litres or 5000 litres is selected according to the application and required quantities of hydrogel. The selected vessel is equipped with stirring paddles, high shear mixing and recirculation.

Prior to use, the blend vessel is prepared by spraying with a solution of 1000 ppm sodium metabisulphite. The solution remains in contact with the vessel for 20 minutes to sterilise the vessel. A recirculation pump has a fluid line connected to a lower outlet of the vessel and a fluid line connected to a top region of the vessel. The vessel is flooded with sterilising fluid which is recirculated therein for a contact time of 20 minutes.

Once the sterilisation process is complete, the blend vessel is flushed with a potable water spray that is pumped through the recirculating pump and lines to remove excess sterilising fluid. The removed sterilising fluids are disposed of to waste.

Other equipment used in the method of manufacture for weighing, measuring, storing mixing and/or containing is similarly cleaned and/or sterilised.

### Premix Slurry

Separately, a premix slurry is prepared.

According to the desired application, the required weight in kilograms of high purity and quality food grade guar gum polymer, with a known and low bacterial content, is weighed out and set aside in a sealed bag or small tub.

A volume of monoethylene glycol is measured out in litres. The measured volume in litres is calculated to be three times the weight (in kilograms) of the guar gum polymer. The monoethylene glycol is set aside in a closed container with sufficient spare capacity to hold double the volume of the measured monoethylene glycol.

In order to manufacture the premix slurry, the monoethylene glycol is mixed using a Robot Coupe® or another suitable type of variable high shear mixer having a high shear portable stick type blender immersed in the fluid and set to a medium to high level of mixing. The guar gum polymer is slowly and steadily added to the monoethylene glycol to form a premix slurry. When the premix slurry is an even consistency the mixing is stopped. Further batches of premix slurry can be made by mixing monoethylene glycol and guar gum as described above.

Use of the pre-mix slurry in manufacture of the gel ensures the polymer does not directly contact water as a powder. Thus, use of the premix slurry reduces likelihood that the polymer will ball up on contact with water to from "fish eyes" which are particulates of polymer that are not fully dispersed. Such balls or lumps in the gel would reduce effectiveness by reducing the amount of polymer in a given formulation available for increasing viscosity of the base gel and thus resulting in a weaker gel in a crosslinked or uncrosslinked system.

If the premix slurry is to be prepared in a location having an ambient temperature greater than around 30°C a glycol ether (between 0-50%) can be added to the mix. The glycol ether is preferably ethylene glycol monobutyl ether and is added for the purpose of stabilising the pre-mix slurry to allow production of good quality hydrogel in ambient temperatures of over 30°C. The addition of the glycol ether reduces the likelihood of lump formation or balling up of the polymer in the water during mixing in high ambient temperature conditions.

### Gelling Agent

A gelling agent is used to provide cross-linking of the hydrogel base gel and is made within a calibrated blend vessel fitted with a paddle mixer. The ulexite method of creating a gelling agent is described below. Several alternative formulations of gelling agents are provided hereinafter.

The calibrated blend vessel is filled with approximately 100 litres of potable water. 30 kilograms of sodium hydroxide is dissolved in the water with continued mixing. Potable water is added to the 700 litre calibration mark. 100kg of ulexite mineral in granular or powder form is added during continued mixing and adequately circulated. When the ulexite is fully dispersed, the blend vessel is topped up to 1000 litres with potable water. The speed of mixing is increased to give good agitation for a minimum of one hour. The fluid in the mixing tank is left to settle for a minimum of 16 hours. The pH is checked to be above a value of 9.5.

### Making the hydrogels

The process of making the hydrogels using the prepared equipment and formulations of premix slurry and gelling agent will now be described.

The required amount of potable water is added to the blend vessel previously described that has been cleaned and sterilised. The blend vessel should have capacity to accommodate the fluid used to make the pre-mix slurry previously described. The blend vessel is set to mix on a low shear paddle mixing setting with the recirculation pump set on a low pumping rate.

Sodium chloride (that is food or preservation grade salt containing low and known levels of impurities) is weighed out in an amount to provide about 4% in final hydrogel concentration. Alternatively, the concentration of sodium chloride may be as low as 2% or as high as 10% depending on the application and content of sodium chloride allowed in the pipeline system which is to be treated.

The sodium chloride is added to the mixing vessel slowly to allow dissolution without interrupting the mixing or recirculation. The sodium chloride is fully dissolved in the potable water.

350 grams of food grade sodium metabisulphite per 1000 litres is optimally added for preservation (as well as a detectable additive). Alternatively, between 100 grams per 1000 litres and up to 600 grams per 1000 litres may be added.

Alternatively, sodium hypochlorite solution giving a final concentration of 500ppm of available free chlorine may be added to the mixing system.

The premix slurry is mixed briefly immediately before adding it to the bulk fluid mixing in the blending vessel. When the required volume of premix slurry has been added to the mixture, a high shear mixer can be operated for 1 minute to ensure complete dispersion of the premix slurry in the bulk blended fluid. The high shear mixer should not be operated for more than 2 minutes to avoid damaging the polymer by exposure to high shear mixing.

The blender is left to mix for between 30 - 60 minutes in a warm climate above 25°C to over 3 hours in a cold climate at less than 10°C.

The required degree of blending and mixing is determined by carrying out a crosslink test using an amount of gelling agent previously described.

Gelling agent is added to a sample of the bulk fluid from the blend vessel. If addition of the gelling agent results in a poorly formed crosslinked gel, the system must be left to continue to mix until another test confirms the mixture will effectively crosslink. Once the sample of fluid from the blend vessel gives a good crosslink it is decanted from the vessel into bulk storage tanks and/or suitable containers that have been previously sterilised and flushed. Thus, the hydrogel base gel product is ready for supply or crosslinking.

### Use of the Hydrogel

The hydrogel can be supplied and/or used in two distinct forms: a base gel (uncrosslinked gel) and a crosslinked gel. Functionality of the different hydrogels is discussed below.

### Uncrosslinked hydrogels

A hydrogel base gel without addition of gelling agent to crosslink the polymeric structure can be used as a debris lift and removal system within a pipeline. Such a base gel (uncrosslinked gel) is an ideal medium for lifting and suspending debris within the pipeline. However, the base gel is fluid and does not 'hold its shape', rather, it will disperse under gravity to the walls of a pipeline. Thus, when used for the purpose of cleaning a pipeline, the uncrosslinked base hydrogel must be bound at each end by a more solid structure such as a crosslinked hydrogel, a solid gel having a polymer content of between 1.2% to 1.8% (thereby having a viscosity sufficient - even without crosslinking - to be forced through a conduit as a plug flow), a mechanical pig, or a combination of these items.

A hydrogel base gel without addition of a gelling agent to crosslink the polymeric structure can optimally be dosed with sodium hypochlorite at a concentration of 1000ppm of residual free chlorine as measured by a suitable test such as the Palin DPD Method. This additive will be detectable to verify the presence of any remaining hydrogel as it leaches into water.

### Crosslinked hydrogels

A hydrogel base which has been crosslinked by addition of the gelling agent to crosslink the polymeric structure can be used to lift debris and remove it from a pipeline system. A crosslinked hydrogel holds its form and therefore can substantially fill a cross section of a pipeline in use. Typically, low concentration polymer crosslinked gels are suitable for debris lift. Higher polymer content in the crosslinked hydrogel forms a very strong gel with a high surface tension. High concentration polymer crosslinked hydrogels tend to push debris along in advance of the gel rather than entrain the debris. Such ploughing of debris could lead to heaping up and possible blocking of the pipeline if large quantities of debris are displaced. However, the crosslinked form of a hydrogel at high polymer concentration can be useful for plugging, containing or pushing along the pipeline a quantity of uncrosslinked hydrogel as noted above.

For optimal use within a pipeline for debris entrainment and lift, a crosslinked hydrogel should have a concentration of less than 1% polymer and greater than 0.2% polymer in the base gel.

A hydrogel having a crosslinked polymeric structure by addition of a gelling agent can also be used as a separation gel between a dirty water slug and clean flushing water applied to a pipeline. In this situation the crosslinked gel may optimally have a polymer concentration of 0.2% to 0.7% for lines up to 8 inches (20.3 cm) in diameter. Lines having a diameter greater than 8 inches (20.3 cm) (up to and including 16 inch (40.6 cm) diameter lines) optimally utilise a crosslinked hydrogel of between 0.75% and around 1.6% polymer content. Polymer content greater than about 1.6% makes it generally difficult to form an even crosslink by mixing without good agitation (high shear being applied which may impact the gel by breaking the polymer chains). Gels with such a high polymer content are more difficult to deploy into a pipeline system due to high viscosity, the resultant friction and plugging effects in the application equipment and at the pipeline entry point.

A crosslinked gel may be used as a separation gel which is applied in two parts to form a solid plug at a leading and a trailing end of a gel system (known as a 'train'). Between the crosslinked gel at each end of the train, a pipeline treatment fluid may be placed as an intermediate fluid and the whole system (train) is pushed down the pipeline allowing the treatment fluid part or 'pill' to contact the internal pipeline surfaces with a high concentration of the treatment fluid.

The pipeline treatment fluid may be a sterilisation fluid, a treatment for root invasion and/or treatment for the removal of debris or colour from a pipeline system. The treatment fluid should also include detectable additive(s) in order to monitor the removal of the treatment fluid product from the pipeline.

Alternatively or additionally, the intermediate fluid treatment between the separation gel may also be a non crosslinked base gel which contains the detectable additive(s) and may incorporate additional treatment mediums such as biocidal chemicals. The intermediate treatment fluid may also contain ground glass or ceramic particles or other abrasive agents such as garnet sand in order to add abrasion to enhance cleaning of the contact surface area of the gel to the sidewalls of the pipeline and thus increase cleaning efficiency.

When an application requires use of a crosslinked hydrogel, preferably the gelling agent and the hydrogel base gel remain separate until the time of the desired treatment. Thus, the gelling agent and the base hydrogel are brought into contact at the point of entry into the pipeline. An advantage of this arrangement is that it allows use of a much higher concentration/strength polymer base hydrogel to be used within a pipeline system when otherwise the viscosity of the crosslinked gel would render it unsuitable for handling and flowing to the degree that removal from a supply tank would be inhibited.

One example is the manufacture of a hydrogel base gel with a polymer concentration of 1.6%. If this product was crosslinked and then stored within a tank for later supply, it would be very difficult to remove the crosslinked gel from the supply tank unless an unusually large outlet is provided. In comparison, a double pump mixing system can be provided at the point of entry to a pipeline so that the uncrosslinked base hydrogel and the gelling agent are mixed a short distance (such as a few feet or inches) from the pipeline entry point, from where the hydrogel system can be more easily applied to the pipeline.

### Detection of Remaining Hydrogel Product

One of the key features of the method of the invention is the detection of residual hydrogel product in the pipeline. A reliable detection method is required in order to accurately verify the removal of the hydrogel and cleaning products transported along the pipeline. Detection can be carried out in several ways according to different embodiments of the invention, described below. The presence or absence of residual hydrogel is indicated by the presence or absence of an additive. Importantly, the chemical composition of the additive must neither promote nor inhibit the process of converting the hydrogel base gel into a crosslinked structure. This is because the additive must have the ability to move freely and dissociate into the flushing water to serve its function as a "detectable" additive.

### Food grade dyestuffs

Food grade dyes such as food colourants may be added to the hydrogel at the concentration of about 1% or less depending on the depth of colour which may then be detectable after leaching out of the hydrogel. One example of visible detectable agent is cochineal which forms an intense red colour and is easily detectable visually and/or with a suitably calibrated colorimeter/spectrophotometer.

### Fluorescein

Fluorescein dye may also be used as a detectable additive. Fluorescein dye is visually detectable at less than 10ppm can also be reliably measured using a fluorimeter at concentrations of less than 1ppm in clean water samples.

### Sodium Metabisulphite

Sodium metabisulphite is a detectable additive as the sulphite or sulphate. However these ions are not generally easily detectable at very low concentrations.

### Cation salts

Sodium or potassium salts can be used as detectable additives to the hydrogel. The chloride, sulphate, nitrate or other water soluble salt, are generally detectable. Typically, offsite analysis would be required to detect the cation using atomic absorption spectrophotometry or inductively coupled plasma emission spectroscopy (ICP).

Other cation salts (salts of alkalis or alkaline earth metals) may be added to the hydrogel for detection purposes. However these salts may have low solubility in the water matrix of a hydrogel.

### Chlorine/Chloride ions

Additives that release chloride and/or chlorine ions into the flushing water are suitable.

Chlorine can be detected by the Palin DPD Method using a standard Palin DPD Test Kit®. Chloride ions can be detected by the standard Silver Nitrate method using sodium dichromate as the indicator using 0.0282N Standard Silver Nitrate Solution.

This method gives a coloured end point in a simple titration and is very accurate.

### One Method of Purging and Subsequently Verifying a Water Line

Methods of manufacture and examples of suitable hydrogels have been previously described. According to one embodiment of the invention, a method of purging and subsequently verifying a pipeline carrying drinking water is detailed below.

A pipeline carrying water is buried in a location beneath a main road. The pipeline is 'offline' and isolated due to red/brown rust sediment within the system.

The presence of rust and sediment is judged to be due to the age of the pipeline and the possible disturbance of the sediment in times of high demand from consumers. The debris is considered to be iron oxide giving an unacceptable coloured drinking water product. Historical records indicate that part of the pipeline had a bituminous type lining and this was giving the water an odour at times of lower demand.

The line is isolated (offline) from the main potable water system. Valves are present at each end of the line along with a hydrant for application and removal of the hydrogel.

A hydrogel base gel is manufactured as previously described and has a concentration of sodium chloride of 0.4% for detection purposes and contains 1.2% polymer concentration along with 350 grams per 1000 litres of sodium metabisulphite. A gelling agent composed from a ulexite base is manufactured also as previously described.

On site on the pavement of a busy roadway a small area is contained with barriers.
Two small air driven diaphragm pumps fed from a mobile compressor pump base hydrogel and gelling agent simultaneously at a ratio of 98:2 through a static mixer. Within 10 seconds a high viscosity crosslinked hydrogel is formed which enters the 4" pipeline via the hydrant and a short hose of approximately 1 metre. Approximately 350 litres of crosslinked gel is pumped into the pipeline in this way and corresponding to a linear length of 40 metres of hydrogel.

Once the crosslinked hydrogel is displaced into the pipeline, the hydrogel connection hose to the hydrant is removed and a potable water supply is connected to the hydrant. The water is fed through a non-return valve to the hydrant from the pressurised water main. The pressure of the water acts to displace the hydrogel along the pipeline towards the outlet. The crosslinked hydrogel is displaced at a rate of about 250 litres per hour. The flushing water is applied using a pressure control valve to retain the pressure under the burst pressure set for the pipeline. The displacement of the crosslinked hydrogel takes approximately 30 minutes giving a linear transit speed of about 1.0 metre per second.

The flushing water is added to move the hydrogel within and out of the pipeline at the outlet end from where the residual fluids are collected in waste tanks employed to collect the residues. When the hydrogel is judged to have been flushed out of the outlet of the pipeline, flushing water is run to a waste water/ sewage pipeline.

Samples are collected at intervals from the outlet as the flushing water is fed through the pipeline. Samples are tested for chlorine using a Lovibond DPD method and chloride using the Silver Nitrate method. The detection of chloride indicates the presence of residual hydrogel. This may also be visually detected by the colour of the fluids coming from the pipeline.

When no more hydrogel is visibly coming out of the pipeline, the system is closed and the volume of water used for flushing is noted.

After a short period of 5 minutes to check parameters and volumes, the system is flushed with one line volume of potable water and then closed in (shut off) and sealed for 1 hour. At the end of this time the flushing water is flowed slowly along the line and samples frequently collected to check for the presence of chloride and chlorine.

During flushing the presence of chloride is detected indicating the presence of hydrogel in the system. Visual detection of hydrogel may also be possible in a second flush with potable mains water.

Presence of chlorine is detectable using the Lovibond DPD comparator method. In this test a sample of water of known volume is taken into the apparatus and a DPD tablet added. The resultant colour of the sample after dissolution of the tablet is measured in the Lovibond Comparator where it is compared to standard colours in the Comparator range disc. The direct reading is immediately available for indication of the level of chlorine in the water from which the sample was taken. This method is generally accurate to +/- 1ppm.

Presence of chloride ions is detectable in samples of water by Silver Nitrate titration.
Some samples are analysed both on site and away from the application site and are also subjected to test for chloride level by use of a standard method using Silver Nitrate 0.0282N solution. This highly accurate measurement is valid to +/- 2ppm and confirm the results found at the test site.

The normal level of chloride in drinking water using a silver nitrate standard method is approximately 14ppm. Thus levels of chloride can be assessed relative to the standard volumes of these ions typically present in the drinking water supply.

A large quantity of brown viscous fluid is observed being expelled from the pipeline into the waste container during the first flushing period. Thereafter no coloured water is seen to come from the outlet of the pipeline during flushing operations.

Following the second flush, no enhanced level of chloride is evident and no hydrogel is seen to exit the pipeline visually in a clear tubing area specifically designed into the system to allow for visual inspection of the flushing water.

The pipeline is shut in overnight and the flushing water is tested the next day. No raised levels of chloride/chlorine are detected.

Optionally, a second hydrogel slug of 350 litres is run in the pipeline in the same manner as previously described.

The initial displacement of fluid from the line following deployment of the crosslinked hydrogel shows coloured water entering the waste container. The coloured water has a smaller volume and a less dense colour compared with the waste observed during the first operation.

Testing of the flushing water initially indicates higher residual levels of chloride indicating presence of residual hydrogel in the system. Further flushing is required. After two pipeline volumes of over flush including waiting periods, no further raised levels of chloride are detected.

Pipeline system monitoring continues over several days and weeks following demobilisation and removal of the equipment.

Residual levels of chloride/chlorine found in the post treatment water samples are identical to normal potable water content levels.

The content of solids, returns to insignificant amounts and the colour, taste and smell of the drinking water returns to normal levels following the treatment. Therefore the water pipeline is cleaned and returns to normal service.

The method of the invention allows the drinking water line to be cleaned and verified as safe following the cleaning operation by the absence of detectable levels of chemical additives in the hydrogel. Thus, the method of the invention advantageously compares with the alternative method of relaying new pipeline under a major road interchange area in terms of cost, time and efficiency.

The method of purging and subsequently testing water lines as well as the hydrogel according to the invention may be applied to raw water mains, such as the water carrying pipes from a source of water, for example, a river, reservoir, lake or loch. As these raw water lines are generally larger in diameter (from 10 to 36 inches diameter, i.e. 25.4 to 91.4 cm), the degree of polymer for crosslinking within the base hydrogel is adjusted accordingly.

The method of the invention is also particularly suited to use within main potable water lines that are generally smaller in diameter (around 4-10 inches, i.e. 10.2 - 25.4 cm) compared with the raw water mains.

The method of the invention allows risk assessments to be performed to comply with regulations relating to drinking water pipelines issued by the Department for Water Inspectorate (DWI) an agency of Government in the United Kingdom.

There are no specific rules regarding the content of 'offline' pipelines, i.e. pipelines that are not presently supplying drinking water. However, before any line can be used for supply ("online" pipelines) a risk assessment must be carried out to determine that the line is suitable for carrying potable water to the public. Thus, the present invention provides verifiable data that the hydrogel and purging chemicals added to an 'offline' pipeline are adequately removed and no longer remain within the pipeline system. Therefore the present invention allows quantification of the risk of contamination to the public water supply.

This is achieved by providing a hydrogel with an additive having a leachable osmotic effect driven ion that is detectable at low concentrations. Thus, the invention ensures that the gel can be verified as removed from the line before the line is brought back into "on-line" service.

Although particular embodiments of the invention have been disclosed herein in detail, this is by way of example and for the purposes of illustration only. The invention is limited the appended claims.

### Alternative polymers for forming the hydrogel

The hydrogel may also be formed from a substituted guar gum species such as hydroxyl propyl guar gum, also known as HP guar. If HP Guar Gum is used to compose the hydrogel, the polymer is dispersed in water at neutral pH by spreading the solid polymer over the surface of the water with strong agitation and allowing the polymer to slowly enter the water phase. As the polymer is hydrated the pH changes. The pH needs to be returned to a neutral pH by the addition of a small amount of organic acid such as acetic, citric, or propionic acid. The resulting hydrogel increases rapidly in viscosity as the pH returns to neutral. After further mixing, the base hydrogel can be tested by crosslinking with gelling agent as previously described.

A hydrogel which will only be used as a non-crosslinked base gel for debris lift may be composed of xanthan gum.

A hydrogel which will only be used as a non-crosslinked base gel for debris lift may be composed of a cellulose based polymeric species such as carboxy methyl cellulose (CMC) or other substituted cellulose based polymers another example of which is hydroxyl ethyl cellulose.

These polymeric species unless specifically of food grade quality may not be favoured for use in pipelines which are to be used for drinking water due to possible toxicity levels.

A further hydrogel may be composed of water and fine cellulose fibres such as Arbocel®. However, this form of hydrogel may only be formulated with very low levels of chloride ion, whereas higher levels of chloride ion are favoured for optimal detection. Visual indicators are more preferably used in this form of hydrogel.

### Alternative gelling agent

An alternative gelling agent including boric acid may be used to achieve the required degree of crosslinking.

300 litres of water are added to a calibrated mixing tank. 50 kg of sodium hydroxide are added to the mixing tank with stirring to dissolve the solid. 100 kg of boric acid is added to the mixing tank with stirring. Once the solids have fully dissolved, 2200 litres of water is added to the mixing tank. The pH is checked to be above 9.5.

The gelling agent is dispensed into 25 litre, 200 litre drums or bulk tanks of 1000 litres as appropriate. This gelling agent can be added to a sample of base hydrogel from the bulk fluid to test crosslinking as previously described.

### Alternative equipment

According to an alternative embodiment, the premix slurry is mixed using a paddle paint stirrer mounted on an electric or battery driven drill unit. However, this method of mixing takes longer to achieve a slurry having an even consistency.

It is contemplated by the inventors that various substitutions, alterations, and modifications may be made to the invention without departing from the scope of the invention as defined by the claims.

Furthermore, whilst the focus of the present invention has been on a method of purging and subsequently verifying a *potable* water carrying conduit, it will be appreciated that the underlying concept of the invention can equally be employed in other types of conduits, such as: (i) non-potable water carrying conduits; (ii) sewage conduits; and (iii) crude oil conduits. With regard to sewage conduits, a dyed hydrogel - for example - could be employed to lift and remove debris from low spots (or dips) in the conduit thereby increasing its capacity and flow rate.

## Claims

1. A method of purging a liquid-carrying conduit, the method including the steps of:
providing a hydrogel comprising an additive in the form of an ion selected from the group comprising: chloride ions, sulphate ions, and nitrate ions;
transporting the hydrogel along at least a portion of an offline liquid-carrying conduit to thereby purge the conduit of debris;
removing the hydrogel from the offline liquid-carrying conduit;
flushing the offline liquid-carrying conduit with a volume of flushing water;
verifying removal of any residual hydrogel from the offline liquid-carrying conduit as part of a contamination risk assessment by checking the flushed water for detectable traces of the additive ion;
**characterised in that** the additive ion is dissociable from the hydrogel by diffusing into the volume of flushing water to thereby enable detection of its presence within a volume of flushing water collected from the offline liquid-carrying conduit following the flushing step; and
wherein, if the presence of the additive is detected following the flushing step, the method further includes repeating the step of flushing the offline liquid-carrying conduit with a further volume of flushing water; and repeating the verifying step until no traces of the additive ion are detected within the further volume of flushing water.

2. A method as claimed in claim 1 including transporting the hydrogel along at least a portion of a potable water carrying conduit by applying a pressure differential across the hydrogel to urge forward movement of the hydrogel along the conduit.

3. A method as claimed in claim 1 or claim 2, including purging the conduit by entraining debris in the conduit within the hydrogel.

4. A method as claimed in any preceding claim, wherein the hydrogel is crosslinked.

5. A method as claimed in any one of claims 1 to 3, wherein the hydrogel is a viscous uncrosslinked gel having a polymer content being greater than or equal to 1.2% to allow its transportation along at least a portion of a potable water carrying conduit as a plug flow.

6. A method as claimed in any of claims 1 to 4, including transporting a train comprising two hydrogel plugs having a treatment fluid therebetween, wherein the hydrogel plugs and the treatment fluid each comprising said additive, along at least a portion of a potable water carrying conduit.

7. A method as claimed in claim 6, wherein the treatment fluid includes at least one substance comprising said additive, the substance being selected from the group consisting of: sterilisation fluid, root invasion treatment, debris removal fluid, rust treatment, colour removal treatment, biocidal chemicals; ground glass; abrasive particles; and ceramic particles.

8. A method as claimed in any preceding claim, wherein the hydrogel comprises an additive which is visually detectable once it dissociates into the volume of flushing water; and wherein the step of verifying removal of the hydrogel from an offline liquid-carrying conduit includes the step of visually observing a volume of flushing water for detectable traces of the additive.

9. A method as claimed in claim 8, including providing an inspection window within, or downstream of, the water carrying conduit and directing said volume of flushing water proximate the inspection window to enable visual observation of detectable traces of the additive.

10. A method as claimed in any preceding claim, including verifying removal of the hydrogel from the water using at least one of the following detection methods: visual observation; colorimeter analysis; spectrophotometer analysis; fluorimeter analysis; atomic absorption spectrophotometry; inductively coupled plasma emission spectroscopy ICP; Palin DPD method/test; and Silver Nitrate method using sodium dichromate indicator.

## Patentansprüche

1. Verfahren zum Ausspülen einer flüssigkeitsführenden Leitung, wobei das Verfahren die Schritte beinhaltet:
Bereitstellen eines Hydrogels, das einen Zusatz in der Form eines Ions umfasst, das ausgewählt ist aus der Gruppe umfassend: Chloridionen, Sulfationen und Nitrationen;
Transportieren des Hydrogels entlang mindestens eines Abschnitts einer flüssigkeitsführenden Offline-Leitung, um dadurch Teilchen aus der Leitung auszuspülen;
Entfernen des Hydrogels aus der flüssigkeitsführenden Offline-Leitung;
Spülen der flüssigkeitsführenden Offline-Leitung mit einem Volumen von Spülwasser;
Verifizieren von Entfernung jeglichen restlichen Hydrogels aus der flüssigkeitsführenden Offline-Leitung als Teil einer Kontaminationsgefahrenbewertung durch Prüfen des gespülten Wassers auf nachweisbare Spuren des lonenzusatzes;
**dadurch gekennzeichnet, dass** der lonenzusatz von dem Hydrogel durch Diffundieren in das Volumen von Spülwasser trennbar ist, wodurch Nachweis seiner Gegenwart in einem Volumen von Spülwasser möglich ist, das aus der flüssigkeitsführenden Offline-Leitung nach dem Spülschritt gesammelt wird; und
wobei, wenn Gegenwart des Zusatzes nach dem Spülschritt nachgewiesen wird, das Verfahren weiter Wiederholen des Spülschritts der flüssigkeitsführenden Offline-Leitung mit einem weiteren Volumen von Spülwasser beinhaltet; und Wiederholen des Verifizierungsschritts, bis keine Spuren des lonenzusatzes innerhalb des weiteren Volumens von Spülwasser nachgewiesen werden.

2. Verfahren nach Anspruch 1, beinhaltend Transportieren des Hydrogels entlang mindestens eines Abschnitts einer Trinkwasser führenden Leitung durch Anwenden eines Druckdifferentials über das Hydrogel, um Vorwärtsbewegung des Hydrogels entlang der Leitung zu erzwingen.

3. Verfahren nach Anspruch 1 oder Anspruch 2, beinhaltend Ausspülen der Leitung durch Mitführen von Teilchen in der Leitung in dem Hydrogel.

4. Verfahren nach einem vorstehenden Anspruch, wobei das Hydrogel vernetzt ist.

5. Verfahren nach einem der Ansprüche 1 bis 3, wobei das Hydrogel ein viskoses unvernetztes Gel mit einem Polymergehalt ist, der größer oder gleich 1,2% ist, um dessen Transport entlang mindestens eines Abschnitts einer Trinkwasser führenden Leitung als eine Pfropfenströmung zu ermöglichen.

6. Verfahren nach einem der Ansprüche 1 bis 4, beinhaltend Transportieren eines Zugs, der zwei Hydrogelpfropfen mit einem dazwischen liegenden Behandlungsfluid umfasst, wobei die Hydrogelpfropfen und das Behandlungsfluid jeweils den Zusatz umfassen, entlang mindestens eines Abschnitts einer Trinkwasser führenden Leitung.

7. Verfahren nach Anspruch 6, wobei das Behandlungsfluid mindestens eine Substanz beinhaltet, die den Zusatz umfasst, wobei die Substanz ausgewählt ist aus der Gruppe bestehend aus: Sterilisierungsfluid, Wurzelinvasionsbehandlung, Teilchenentfernungsfluid, Rostbehandlung, Entfärbungsbehandlung, bioziden Chemikalien; gemahlenem Glas; Schleifpartikeln; und Keramikpartikeln.

8. Verfahren nach einem vorstehenden Anspruch, wobei das Hydrogel einen Zusatz umfasst, der visuell nachweisbar ist, sobald er in das Volumen von Spülwasser abgetrennt ist; und wobei der Schritt zum Verifizieren von Entfernung des Hydrogels aus der flüssigkeitsführenden Offline-Leitung den Schritt zum visuellen Beobachten eines Volumens von Spülwasser auf nachweisbare Spuren des Zusatzes beinhaltet.

9. Verfahren nach Anspruch 8, beinhaltend Bereitstellen eines Überprüfungsfensters, in oder stromabwärts der wasserführenden Leitung und Lenken des Volumens von Spülwasser in die Nähe des Überprüfungsfensters, um visuelle Beobachtung nachweisbarer Spuren des Zusatzes zu ermöglichen.

10. Verfahren nach einem vorstehenden Anspruch, beinhaltend Verifizieren von Entfernung des Hydrogels aus dem Wasser unter Verwendung mindestens eines der folgenden Nachweisverfahren: visuelle Beobachtung, Kolorimeteranalyse; Spektrofotometeranalyse, Fluorimeteranalyse; Atomabsorptionsspektrofotometrie; induktiv gekoppelte Plasmaemssionsspektroskopie ICP; Palin-DPGMethode/Test; und Silbernitratmethode unter Verwendung eines Natriumdichromat--Indikators.

## Revendications

1. Procédé de purge d'un conduit de transport de liquide, le procédé incluant les étapes de :
fourniture d'un hydrogel comprenant un additif sous la forme d'un ion sélectionné à partir du groupe comprenant : des ions chlorure, des ions sulfate et des ions nitrate ;
transport de l'hydrogel le long d'au moins une partie d'un conduit de transport de liquide hors ligne pour ainsi purger tout débris du conduit ;
retrait de l'hydrogel du conduit de transport de liquide hors ligne ;
rinçage du conduit de transport de liquide hors ligne avec un volume d'eau de rinçage ;
vérification de l'élimination de tout hydrogel résiduel du conduit de transport de liquide hors ligne dans le cadre d'une évaluation des risques de contamination en vérifiant la présence de traces détectables de l'ion additif dans l'eau rincée ;
**caractérisé en ce que** l'ion additif est dissociable de l'hydrogel par diffusion dans le volume d'eau de rinçage pour ainsi permettre la détection de sa présence dans un volume d'eau de rinçage collecté à partir du conduit de transport de liquide hors ligne après l'étape de rinçage ; et
dans lequel, si la présence de l'additif est détectée après l'étape de rinçage, le procédé inclut en outre la répétition de l'étape de rinçage du conduit de transport de liquide hors ligne avec un volume supplémentaire d'eau de rinçage; et répétition de l'étape de vérification jusqu'à ce qu'aucune trace de l'ion additif ne soit détectée dans le volume supplémentaire d'eau de rinçage.

2. Procédé selon la revendication 1, incluant le transport de l'hydrogel le long d'au moins une partie d'un conduit de transport d'eau potable en appliquant un différentiel de pression à travers l'hydrogel pour encourager un mouvement vers l'avant de l'hydrogel le long du conduit.

3. Procédé selon la revendication 1 ou la revendication 2, incluant la purge du conduit en entraînant des débris dans le conduit au sein de l'hydrogel.

4. Procédé selon l'une quelconque des revendications précédentes, dans lequel l'hydrogel est réticulé.

5. Procédé selon l'une quelconque des revendications 1 à 3, dans lequel l'hydrogel est un gel visqueux non réticulé ayant une teneur en polymère supérieure ou égale à 1,2 % pour permettre son transport le long d'au moins une partie d'un conduit de transport d'eau potable comme un écoulement piston.

6. Procédé selon l'une quelconque des revendications 1 à 4, incluant le transport d'un train comprenant deux bouchons d'hydrogel ayant un fluide de traitement entre eux, dans lequel les bouchons d'hydrogel et le fluide de traitement comprennent chacun ledit additif, le long d'au moins une partie d'un conduit de transport d'eau potable.

7. Procédé selon la revendication 6, dans lequel le fluide de traitement inclut au moins une substance comprenant ledit additif, la substance étant sélectionnée à partir du groupe constitué de : fluide de stérilisation, traitement d'invasion de racines, fluide d'élimination de débris, traitement de la rouille, traitement d'élimination de couleur, substances chimiques biocides ; verre rodé ; particules abrasives ; et particules de céramique.

8. Procédé selon l'une quelconque des revendications précédentes, dans lequel l'hydrogel comprend un additif qui est visuellement détectable une fois qu'il se dissocie dans le volume d'eau de rinçage ; et dans lequel l'étape de vérification de l'élimination de l'hydrogel d'un conduit de transport de liquide hors ligne inclut l'étape d'observation visuelle d'un volume d'eau de rinçage pour des traces détectables de l'additif.

9. Procédé selon la revendication 8, incluant la fourniture d'une fenêtre d'inspection au sein ou en aval du conduit de transport d'eau et la direction dudit volume d'eau de rinçage à proximité de la fenêtre d'inspection pour permettre l'observation visuelle de traces détectables de l'additif.

10. Procédé selon l'une quelconque des revendications précédentes, incluant la vérification de l'élimination de l'hydrogel de l'eau en utilisant au moins l'un des procédés de détection suivants : observation visuelle ; analyse colorimétrique ; analyse au spectrophotomètre ; analyse au fluorimètre ; spectrophotométrie d'absorption atomique ; spectroscopie d'émission à plasma à couplage inductif ICP ; méthode/test Palin DPD ; et méthode au nitrate d'argent utilisant un indicateur de dichromate de sodium.
